# EUROPEAN PATENT SPECIFICATION

(11) **EP 4 084 406 B1**
(45) Date of publication and mention of the grant of the patent: **05.02.2025**
(21) Application number: 20904956.8
(22) Date of filing: 25.12.2020
(51) Int. Cl.: H04L 41/0806, H04L 41/12, H04L 41/00

(54) **METHOD AND EQUIPMENT FOR SENDING INTERFACE MESSAGE**
VERFAHREN UND VORRICHTUNG ZUM SENDEN EINER SCHNITTSTELLENMELDUNG
PROCÉDÉ ET ÉQUIPEMENT D'ENVOI DE MESSAGE D'INTERFACE

(30) Priority: 27.12.2019 CN 201911378452
(43) Date of publication of application: 02.11.2022
(73) Proprietor: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Liuyan, Beijing 100032 (CN)
(74) Representative: Novagraaf Technologies
(86) International application number: PCT/CN2020/139625
(87) International publication number: WO 2021/129839

(56) References cited:
- WO-A1-2017/070851
- CN-A- 101 345 754
- CN-A- 109 302 372
- CN-A- 109 995 588
- US-A1- 2019 260 640
- JEAN-MICHEL CAIA CICT P R CHINA: "MTN Section Layer frame format considerations;C1391", vol. 11/15, 18 June 2019 (2019-06-18), pages 1 - 7, XP044270213, Retrieved from the Internet <URL:https://www.itu.int/ifa/t/2017/sg15/docs/c/ties/T17-SG15-C-1391!!MSW-E.docx> [retrieved on 20190618]

## Description

### CROSS-REFERENCE TO RELATED APPLICATION

The present application claims priority to Chinese patent application No. 201911378452.2, filed on December 27, 2019.

### TECHNICAL FIELD

The present disclosure relates to the technical filed of mobile communications, and in particular to a method and device for sending interface information.

### BACKGROUND

With the development of different bearer transmission requirements such as mobile communication, data center and Internet, transmission interfaces evolve and change continuously with technology.

For the requirement of large bandwidth transmission such as the data center, a Flex Ethernet (FlexE) technology is proposed based on the traditional Ethernet technologies. FlexE adds a FlexE Shim layer between an Ethernet Media Access Control (MAC) layer of Layer-2 (L2) of Ethernet and an Ethernet Physical (PHY) layer of Layer-1 (L1) of Ethernet based on the lightweight enhancement of Ethernet. The FlexE Shim layer schedules and dispatches data from multiple client ports to multiple different subchannels in a time-slot manner based on a time division multiplexing dispatch mechanism. FlexE may decouple the rate of the Ethernet MAC layer and the rate of the Ethernet PHY layer.

A Slicing Packet Network (SPN) is a new generation of bearer network technology system, mainly oriented to 5G bearing. A Metro Transport Network (MTN) is a standard transmission technology system of ITU-T, mainly corresponding to a (hard) Slicing Channel Layer (SCL) and interface of the SPN, and including a slicing path layer and a slicing section layer. An interface of the MTN is compatible with FlexE but not FlexE. On the basis of the section layer compatible with an interface frame format of FlexE, the path layer of end-to-end networking and its corresponding functions like Operation Administration and Maintenance (OAM), and performance monitoring and protection are added in the SPN/MTN.

Thus, the traditional Ethernet, FlexE and MTN are different interfaces and technologies. At present, when a device is implemented, in order to be compatible with various scenarios, an interface board may flexibly set the interface to work in a common Ethernet mode or work in a FlexE/MTN mode.

In the related art, for a device of which interfaces support multiple modes, the mode (state) in which one of its interfaces operates may be set through a management and control system, for example, the common Ethernet mode, the FlexE mode, or the MTN mode. Due to the diversity of interface modes of the device, the incompatibility of interface modes may affect device intercommunication.

JEAN-MICHEL CAIA CICT P R CHINA: "MTN Section Layer frame format considerations; C1391" concerns that MTN section layer keeps the same base frame/multiframe, overhead, alignment and multiplexing format as OIF FlexE.

### SUMMARY

The present invention is set out in the appended set of claims. At least one embodiment of the present disclosure provides a method for sending interface information, a first network element and a computer-readable storage medium, which can realize the interaction of interface information between devices and provide technical support for device intercommunication.

Compared with the related art, the method and device for sending interface information provided in the embodiments of the present disclosure realize the intercommunication of interface information between network elements, so that the neighboring network elements can learn capability information of interfaces of the peer, thus providing technical support for interface compatibility and device intercommunication between devices. In addition, the present disclosure solves the problem that a device is required to be able to technically distinguish the FlexE/MTN of its interface and be automatically compatible with configuration intercommunication, including the configuration of working modes and the compatible configuration of overhead channels. In addition, for different bearer transmission requirements such as mobile communication, data center and Internet, the present disclosure can avoid or reduce manual configuration, and a device can flexibly negotiate and enable multiple interface modes according to the present disclosure when its hardware supports the multiple interface modes. Moreover, in the present disclosure, the first network element also reports the obtained interface information of the peer to the management and control system or network management system, so as to solve the problem that it is difficult for the management and control system or the network management system obtain the capability information of the peer.

### BRIEF DESCRIPTION OF THE DRAWINGS

By reading the detailed description of optional implementations below, various advantages and benefits will become clear to those skilled in the art. The drawings are only intended to illustrate the purpose of the optional implementations and are not considered as a limitation on the present disclosure. In addition, the same reference numerals are used to indicate the same parts throughout the drawings. In the drawings:
FIG. 1 is a schematic diagram of an application scenario of an embodiment not falling within the subject matter for which protection is sought.
FIG. 2 is a flowchart of a method for sending interface information according to an embodiment of the present disclosure.
FIG. 3 is another flowchart of a method for sending interface information according to an embodiment of the present disclosure.
FIG. 4 is a structural schematic diagram of a first network element according to an embodiment not falling within the subject matter for which protection is sought.
FIG. 5 is another structural schematic diagram of a first network element according to an embodiment of the present disclosure.

### DETAILED DESCRIPTION

Exemplary embodiments of the present disclosure will be described in more detail with reference to the drawings. Although the exemplary embodiments of the present disclosure are shown in the drawings, it should be understood that the present disclosure may be implemented in various forms and shall not be limited by the embodiments described here. Rather, these embodiments are provided in order to have a more thorough understanding of the present disclosure and to be able to fully convey the scope of the present disclosure to those skilled in the art.

Terms "first", "second" and the like in the description and claims of the application are used to distinguish similar objects and do not have to describe a specific sequence or order. It should be understood that the objects may be exchanged under appropriate circumstances, so that the embodiments of the present disclosure described here may, for example, be implemented in an order different from that described or shown here. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead. "And/or" in the description and the claims represents at least one of connected objects.

The following descriptions are exemplary and not intended to limit the scope, applicability or configuration described in the claims.

As described in the background, the following problems often exist between devices due to the diversity of working modes of interfaces.

First, because a device does not know the network state of the peer, a configuration error may occur, which causes intercommunication failure. For example, for ports of devices at both ends, one end is a client which has a common Ethernet port, and the other end is a port of a SPN device. If the port of the SPN device is set to an MTN mode, the two ports cannot communicate with each other, and the intercommunication can be realized only when the port of the SPN device is set to a common Ethernet mode.

Second, a device is required to be able to technically distinguish the FlexE/MTN capability of its interface. Because in the related art, the FlexE/MTN is based on the same basic frame format at the interface level and not significantly distinguished, which easily leads to confusion and networking chaos. In the related art, there is no distinguishing means at the protocol level.

To solve at least one of the above problems, the embodiments of the present disclosure provide a method for sending interface information, which informs modes supported by interfaces among network elements, so as to provide support for interface compatibility and device intercommunication. Specifically, the method may be used for informing the interface information of a local network element to a neighboring network element, for example, the capabilities of Ethernet, FlexE and MTN supported by the interface and the current configured working mode, so as to provide reference information for solving the above problem of the compatibility and intercommunication of different interface modes.

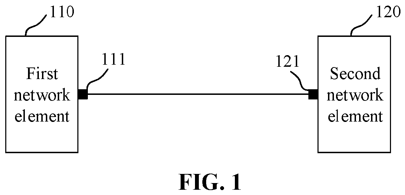

FIG. 1 is a schematic diagram of an application scenario according to an embodiment not falling within the subject matter for which protection is sought. The first network element 110 has a first interface 111, and the second network element 120 has a second interface 121. The first interface 111 of the first network element 110 is connected to the second interface 121 of the second network element 120. Here, the connection between the first interface 111 and the second interface 121 may be wired or wireless. There are no specific limits made in the present disclosure. In the above scenario, the first network element 110 and the second network element 120 are neighboring network elements of each other, that is, there is a neighboring relationship between them.

Taking the first network element as an example, the method for sending interface information provided by the present disclosure is described below. It is to be noted that due to the symmetry of two communication ends, the first network element in the following may also be replaced with the second network element, and the second network element in the following may also be replaced with the first network element.

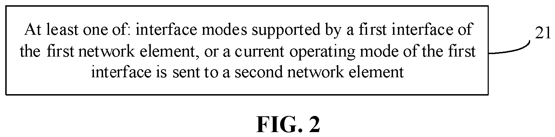

Referring to FIG. 2, when applied to a first network element, a method for sending interface information according to the embodiment of the present disclosure includes the following operations.

At operation 21, at least one of: interface modes supported by a first interface of the first network element, or a current working mode of the first interface is sent to a second network element.

Here, the interface modes include at least one of: an Ethernet mode, a FlexE mode, or a MTN mode. The second network element is a neighboring network element of the first network element. The current working mode of the first interface may be any one of the interface modes supported by the first interface.

For example, the interface modes supported by the first interface may include only the FlexE mode and the MTN mode. For another example, the interface modes supported by the first interface may include the Ethernet mode, the FlexE mode, the MTN mode and many other modes.

Specifically, the first network element may send, through one or more packets, to the second network element information about the interface modes supported by the first interface of the first network element and/or information about the current working mode of the first interface. For example, the interface modes supported by the first interface of the first network element and/or the current working mode of the first interface are sent through a packet. For another example, the interface modes supported by the first interface of the first network element are sent through a packet, and the current working mode of the first interface is sent through another packet.

Similarly, the second network element may send, through one or more packets, to the first network element the interface modes supported by the second interface and/or the current working mode of the second interface. For example, the interface modes supported by the second interface and/or the current working mode of the second interface are sent through a packet. For another example, the interface modes supported by the second interface are sent through a packet, and the current working mode of the second interface is sent through another packet.

In addition, it is to be noted that the MTN mode described in the present disclosure is sometimes called MTN Termination mode, and the FlexE mode described is sometimes called FlexE Termination mode.

In addition, the above packet may be a packet based on an LLDP or other related protocols, or a new type of packet newly defined. Here, the LLDP is usually used for automatically discovering a neighboring network element, and may be extended appropriately by the embodiments of the present disclosure to serve as a packet that carries the interface modes supported by the first interface of the first network element and/or the current working mode of the first interface, so as to indicate the interface modes supported by a local interface and the current working mode of the local interface.

An example of extending a TLV format in an LLDP packet to indicate the interface modes supported by the local interface is provided below. The specific TLV format is shown in Table 1.

**Table 1**

| | | | | |
|---|---|---|---|---|
| tlvType (7 bits) | LengthField (9 bits) | organizationId (3 bytes) | Organization sub Type (1 byte) | dataField (1 byte) |

An example of filling in each field of TLV is shown in Table 2.

**Table 2**

| Field | | Descriptions and values |
|---|---|---|
| tlvType | | 0x01 |
| lengthField | | 6 |
| organizationId | | 00-19-A7 |
| organization Sub Type | | 0x01 |
| | Bit 0 | Identifying whether an interface supports to be configured to the Ethernet mode: |
| | | Values: 0 indicates not support; and 1 indicates support |
| | Bit 1 | Identifying whether an interface supports to be configured to the MTN mode: |
| | | Values: 0 indicates not support; and 1 indicates support |
| | Bit 2 | Identifying whether an interface supports to be configured to the FlexE mode: |
| dataField | | Values: 0 indicates not support; and 1 indicates support |
| | Bit 3 | Identifying whether an interface supports to be configured to the MTN Aware mode: |
| | | Values: 0 indicates not support; and 1 indicates support |
| | Bit 4 | Identifying whether an interface supports to be configured to the FlexE Aware mode: |
| | | Values: 0 indicates not support; and 1 indicates support |
| | Bit 5-15 | Reserved, and filled in with 0 |

If an interface supports to be configured to the Ethernet mode, the FlexE and the MTN mode, Bit0, Bit1, and Bit2 in dataField need to be identified simultaneously, that is, they are all set to 1.

In addition, the LLDP packet may also indicate the current working mode of the interface. Generally, only one working mode can be identified to be the current working mode in a packet. If multiple working modes in the received packet are identified to be the current working mode, a receiving end may select a working mode with the highest capability rank from the identified working modes to be the current working mode in descending order of the following capability ranks: the MTN mode, the FlexE mode, the MTN Aware mode, the FlexE Aware mode, and the Ethernet mode. That is, the capability ranks of the above modes gradually decrease.

Similarly, in the embodiments of the present disclosure, the current working mode of the local interface may also be indicated by extending the TLV format in the LLDP packet. An example of the above TLV format is provided below. The specific TLV format is the same as that in Table 1, and the example of filling in each field of TLV is shown in Table 3.

**Table 3**

| Field | | Descriptions and values |
|---|---|---|
| tlvType | | 0x01 |
| lengthField | | 6 |
| organizationId | | 00-19-A7 |
| organization Sub Type | | Temporarily set to 0x02 |
| dataField | Bit 0 | Identifying whether an interface operates in the Ethernet mode: |
| | | Values: 0 indicates no; and 1 indicates yes |
| | Bit 1 | Identifying whether an interface operates in the MTN mode: |
| | | Values: 0 indicates no; and 1 indicates yes |
| | Bit 2 | Identifying whether an interface operates in the FlexE mode: |
| | | Values: 0 indicates no; and 1 indicates yes |
| | Bit 3 | Identifying whether an interface operates in the MTN Aware mode: |
| | | Values: 0 indicates no; and 1 indicates yes |
| | Bit 4 | Identifying whether an interface operates in the FlexE Aware mode: |
| | | Values: 0 indicates no; and 1 indicates yes |
| | Bit 5-15 | Reserved, and filled in with 0 |

Through the above operations, the present disclosure realizes the intercommunication of interface information between network elements, so that the neighboring network elements can learn capability information of interfaces of the peer, thus providing technical support for interface compatibility and device intercommunication between devices.

According to at least one embodiment of the present disclosure, the interface modes may also include the FlexE Aware mode and the MTN Aware mode. Of course, new interface modes may emerge in the future with the development of interface technologies. The interface modes informed in operation 21 of the present disclosure may also include these new interface modes.

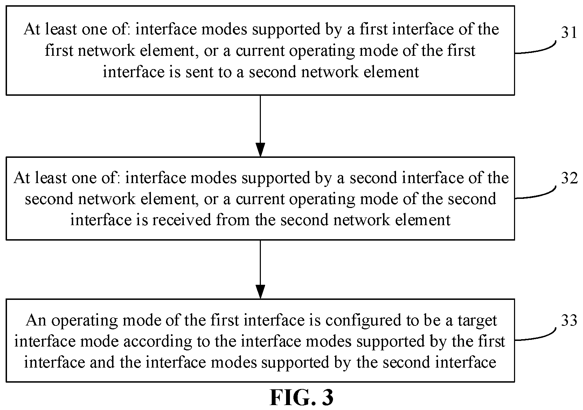

Referring to FIG. 3, when applied to the first network element, another method for sending interface information according to the embodiment of the present disclosure includes the following operations.

At operation 31, at least one of: interface modes supported by a first interface of the first network element, or a current working mode of the first interface is sent to a second network element.

At operation 32, at least one of: interface modes supported by a second interface of the second network element, or a current working mode of the second interface is received from the second network element.

Here, the interface modes supported by the first interface or the second interface may be one or more of the Ethernet mode, the FlexE mode, the MTN mode, the FlexE Aware mode and the MTN Aware mode. The second network element is a neighboring network element of the first network element. The current working mode of the first interface may be any one of the interface modes supported by the first interface. The current working mode of the second interface may be any one of the interface modes supported by the second interface.

For example, the interface modes supported by the first interface may include only the FlexE mode and the MTN mode. For another example, the interface modes supported by the first interface may include the Ethernet mode, the FlexE mode, the MTN mode and many other modes.

Similarly, the interface modes supported by the second interface may include only the FlexE mode and the MTN mode. For another example, the interface modes supported by the second interface may include the Ethernet mode, the FlexE mode, the MTN mode and many other modes.

In addition, if the received current working mode of the second interface includes at least two interface modes, the first network element selects an interface mode with the highest capability rank from the at least two interface modes to be the current working mode of the second interface. In the embodiments of the present disclosure, the capability ranks of the various interface modes may be predefined.

In addition, it is to be noted that there is no strict sequence between operation 31 and operation 32, and the first network element may execute operation 31 and then operation 32, or operation 32 and then operation 31. Of course, the first network element may also execute operation 31 and operation 32 simultaneously.

In addition, after receiving information such as the interface modes supported by the second interface and the current working mode from the second network element, the first network element may also report the information such as the interface modes supported by the second interface of the second network element and the current working mode to a management and control system.

At operation 33, the first network element configures a working mode of the first interface to be a target interface mode according to the interface modes supported by the first interface and the interface modes supported by the second interface, where the target interface mode is an interface mode supported by both the first interface and the second interface.

Here, the first network element may configure, according to the interface modes supported by the local interface and the peer interface respectively, the working mode of the first interface to be an interface mode supported by both the first interface and the second interface, namely the target interface mode.

If the target interface mode is the same as the current working mode of the first interface, no configuration can be performed; and if the target interface mode is different from the current working mode of the first interface, the working mode of the first interface can be adjusted to the target interface mode by reconfiguring it.

Through the above operations, in the embodiments of the present disclosure, the working mode of the local interface may be configured according to the capabilities of the local interface and the peer interface, so that devices at both ends may communicate with each other based on the same interface mode, ensuring the intercommunication between the devices.

According to at least one embodiment of the present disclosure, when the target interface mode is configured in operation 33, the first network element and the second network element may be configured according to the same rules to ensure that the interface modes configured on both ends are the same. In operation 33, at least one interface mode supported by both the first interface and the second interface is determined; then, the interface mode with higher or highest capability rank is selected from the at least one interface mode to be the target interface mode, and the working mode of the first interface is configured to be the target interface mode.

It is assumed that the capability ranks from high to low of various modes are: the MTN mode, the FlexE mode, the MTN Aware mode, the FlexE Aware mode, and the Ethernet mode. Several examples of configuring the target working mode are provided below. It is assumed that the first interface of the first network element supports the above five modes.
A) When the peer interface (i.e., the second interface) supports the MTN mode or the MTN Aware mode, the first network element configures the local interface (i.e., the first interface) to the MTN mode.
B) When the peer interface does not support the MTN mode or the MTN Aware mode, but only supports the FlexE mode or the FlexE Aware mode, the first network element configures the local interface to the FlexE mode.
C) When the peer interface supports only the Ethernet mode, the first network element configures the local interface to the Ethernet mode.

According to at least one embodiment of the present disclosure, in operation 33,
in a case that the first network element supports the current working mode of the second interface, and the second network element supports the current working mode of the first interface, the first network element selects an interface mode with the highest capability rank from the current working modes of the first interface and the second interface to be the target interface mode, and configures the working mode of the first interface to be the target interface mode; and
in a case that the first network element does not support the current working mode of the second interface, or the second network element does not support the current working mode of the first interface, the first network element determines at least one interface mode supported by both the first interface and the second interface, selects an interface mode with the highest capability rank from the at least one interface mode to be the target interface mode, and configures the working mode of the first interface to be the target interface mode.

In addition, in a case that the first network element does not obtain the interface mode supported by the second network element, the first network element configures the first interface to a default interface mode, for example, an interface mode with the lowest capability rank. Specifically, when the first network element cannot receive the information about the interface modes supported by the second interface from the second network element of the peer, the first network element first configures the local interface to the Ethernet mode, and then waits for the management and control system to determine the subsequent configuration of the working mode.

According to at least one embodiment of the present disclosure, in a case that the first interface operates in the FlexE mode or the MTN mode, at least one LLDP packet may be transmitted in a section management channel. The above method may be applied to a scenario where a physical connection relationship between the first network element and the second network element is direct connection.

According to at least one embodiment of the present disclosure, the first network element may also adjust, based on the current working mode of the second interface of the second network element, the channel for the first interface to send the at least one LLDP packet. Specifically, in a case that the first interface operates in the FlexE mode or the MTN mode, if the current working mode of the second interface is the FlexE mode or the MTN Aware mode, a shim-to-shim management channel is enabled at the first interface. The shim-to-shim management channel is used to transmit the at least one LLDP packet. The above method may be applied to a scenario where a logical connection relationship between the first network element and the second network element is direct connection.

According to at least one embodiment of the present disclosure, in a case that the first interface operates in the FlexE mode or the MTN mode, if the current working mode of the second interface is the FlexE mode or the MTN Aware mode, the at least one LLDP packet may be transmitted at the first interface by using both the section management channel and the shim-to-shim management channel of FlexE/MTN overhead frames.

When the local interface operates in the FlexE mode or the MTN mode, the at least one LLDP packet is usually transmitted in the section management channel of the FlexE/MTN overhead frames by default. If the network element connected to the peer sends a packet indicating that the current working mode is the FlexE/MTN Aware mode, after receiving the packet, the local network element uses the shim-to-shim management channel of the FlexE/MTN overhead frames to transmit the at least one LLDP packet at the local interface. In this way, the shim-to-shim management channel can reach the peer through the intermediate FlexE/MTN Aware network, preventing a problem of intercommunication of LLDP channels when traversing the intermediate FlexE/MTN Aware network.

In addition, it is to be noted that, before operation 21 and operation 31, the first network element may predict the current working mode of the second interface of the second network element in the following manners; and then send, in operation 21 or operation 31, information such as the interface modes supported by the first interface and/or the current working mode to the second network element according to the predicted current working mode of the second interface; and receive, in operation 32, according to the predicted current working mode of the second interface, the information such as the interface modes supported by the second interface and/or the current working mode from the second network element.
1) When detecting an MTN frame structure or a FlexE frame structure identifier (0x4B+0x5) from the second network element, the first network element may predict that the second interface of the second network element operates in the MTN/FlexE mode at least. In this case, in operation 21/operation 31, the first network element may send one or more LLDP packets to the second network element through the section management channel (the fourth and fifth code blocks) of the FlexE/MTN overhead frames. The one or more packets carry information such as the interface modes supported by the first interface and/or the current working mode. In operation 32, the first network element may receive one or more LLDP packets from the second network element through the section management channel (the fourth and fifth code blocks) of the FlexE/MTN overhead frames, and obtain the information about the interface modes supported by the second interface and/or the information about the current working mode from corresponding TLV fields of the received LLDP packets.
2) When failing to detect the MTN frame structure or FlexE frame structure identifier from the second network element, the first network element may predict that the second interface of the second network element operates in the Ethernet mode (standard Ethernet mode). In this case, in operation 21/operation 31, the first network element sends one or more LLDP packets to the second network element at the first interface according to an IEEE standard Ethernet interface mode, to indicate the information such as the interface modes supported by the first interface and/or the current working mode. In operation 32, the first network element may receive one or more LLDP packets sent by the second network element through the second interface according to the IEEE standard Ethernet interface mode, and obtain the information about the interface modes supported by the second interface and/or the information about the current working mode from corresponding TLV fields of the received LLDP packets.

Various methods of the embodiments of the present disclosure are described above. Devices for implementing the above methods are provided below.

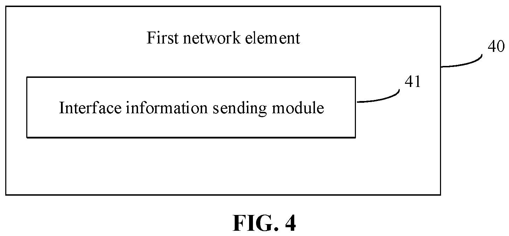

Referring to FIG. 4, an embodiment not falling within the subject matter for which protection is sought provide a first network element 40, which includes interface information sending module 40.

The interface information sending module 41 is configured to send, to a second network element, at least one of: interface modes supported by a first interface of the first network element, or a current working mode of the first interface. The interface modes include at least one of: an Ethernet mode, a FlexE mode, or an MTN mode, and the second network element is a neighboring network element of the first network element.

Optionally, the first network element may also include the following modules (not shown in the figure).

An interface information receiving module, configured to receive, from the second network element, at least one of: interface modes supported by a second interface of the second network element, or a current working mode of the second interface.

An interface configuring module, configured to configure a working mode of the first interface to be a target interface mode according to the interface modes supported by the first interface and the interface modes supported by the second interface. The target interface mode is an interface mode supported by both the first interface and the second interface.

Optionally, the interface modes also include the FlexE Aware mode and the MTN Aware mode.

Optionally, the first network element may also include the following modules (not shown in the figure).

A mode determining module, configured to: in response to that the received current working mode of the second interface includes at least two interface modes, select an interface mode with a highest capability rank from the at least two interface modes to be the current working mode of the second interface.

Optionally, the interface configuring module is further configured to: determine at least one interface mode supported by both the first interface and the second interface; and select an interface mode with a highest capability rank from the at least one interface mode to be the target interface mode, and configure the working mode of the first interface to be the target interface mode.

Optionally, the interface configuring module is further configured to:
in a case that the first network element supports the current working mode of the second interface, and the second network element supports the current working mode of the first interface, select an interface mode with the highest capability rank from the current working modes of the first interface and the second interface to be the target interface mode, and configure the working mode of the first interface to be the target interface mode; and
in a case that the first network element does not support the current working mode of the second interface, or the second network element does not support the current working mode of the first interface, determine at least one interface mode supported by both the first interface and the second interface, select an interface mode with the highest capability rank from the at least one interface mode to be the target interface mode, and configure the working mode of the first interface to be the target interface mode.

Optionally, the interface configuring module is further configured to: in a case that the first network element does not obtain the interface mode supported by the second network element, configure the first interface to a default interface mode.

Optionally, the interface information sending module is further configured to: send the at least one of: interface modes supported by a first interface of the first network element, or a current working mode of the first interface, being carried in at least one TLV of at least one LLDP packet, to the second network element.

Optionally, the interface information sending module is further configured to receive the interface modes supported by the second interface of the second network element and the current working mode of the second interface from at least one TLV of at least one LLDP packet.

Optionally, the first network element may also include the following modules (not shown in the figure).

A channel adjusting module, configured to adjust, based on a current working mode of a second interface of the second network element, a channel for the first interface to send at least one LLDP packet.

Optionally, the channel adjusting module is further configured to: in a case that the first interface operates in the FlexE mode or the MTN mode, in response to that the current working mode of the second interface is the FlexE mode or the MTN Aware mode, enable a shim-to-shim management channel at the first interface, where the shim-to-shim management channel is used to transmit the LLDP packet.

Optionally, in a case that the first interface operates in the FlexE mode or the MTN mode, the at least one LLDP packet is transmitted on the section management channel.

Optionally, the channel adjusting module is further configured to: in response to that the current working mode of the second interface is the FlexE mode or the MTN Aware mode, transmit the at least one LLDP packet at the first interface by using both the section management channel and a shim-to-shim management channel of FlexE/MTN overhead frames.

Optionally, the channel adjusting module is further configured to: in a case that the first interface operates in the FlexE mode or the MTN mode, in response to that the current working mode of the second interface is the FlexE mode or the MTN Aware mode, enable the section management channel of the FlexE/MTN overhead frames at the first interface.

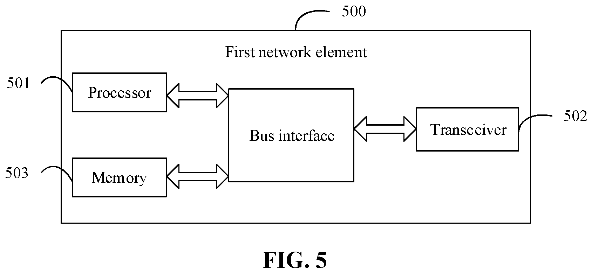

Referring to FIG. 5, the embodiment of the present disclosure provide a structural schematic diagram of the first network element 500, which includes: a processor 501, a transceiver 502, a memory 503 and a bus interface.

In the embodiment of the present disclosure, the first network element 500 may also include: a program stored in the memory 503 and executable by the processor 501. When executed by the processor 501, the program implements the following operation.

At least one of: interface modes supported by a first interface of a first network element, or a current working mode of the first interface is sent to a second network element. The interface modes include at least one of: an Ethernet mode, a FlexE mode, or an MTN mode. The second network element is a neighboring network element of the first network element.

It is understandable that, in the embodiment of the present disclosure, when executed by the processor 501, the computer program can implement each process in the embodiments of the method for sending interface information shown in FIG. 1 or FIG. 2, and can achieve the same technical effect. For avoiding repetitions, elaborations are omitted herein.

In FIG. 5, a bus architecture may consist of any number of interconnected buses and bridges which are linked together by various circuits of one or more processors represented by the processor 501 and memories represented by the memory 503. The bus architecture may also link various other circuits together, such as peripheral devices, voltage regulators, and power management circuits, which are well known in the art and therefore are not described further here. The bus interface provides interfaces. The transceiver 502 may be multiple components, that is, includes a transmitter and a receiver, which provide a unit for communicating with a variety of other devices on a transmission medium.

The processor 501 is responsible for managing the bus architecture and general processing, and the memory 503 may store the data used by the processor 501 to perform operations.

In some embodiment of the present disclosure, a computer-readable storage medium having stored thereon a computer program is also provided. When executed by the processor, the program implements the following operation.

At least one of: interface modes supported by a first interface of a first network element, or a current working mode of the first interface is sent to a second network element. The interface modes include at least one of: an Ethernet mode, a FlexE mode, or an MTN mode. The second network element is a neighboring network element of the first network element.

When executed by the processor, the program can implement all implementations in the method for sending interface information, and can achieve the same technical effect. For avoiding repetitions, elaborations are omitted herein.

Those skilled in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific operating processes of the system, device and unit described above may refer to the corresponding processes in the method embodiments and will not be elaborated herein for convenient and brief description.

In the embodiments provided by the present disclosure, it is to be understood that the disclosed device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions in the embodiments of the present disclosure according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the present disclosure substantially or parts making contributions to the related art or part of the technical solutions may be embodied in form of software product, and the computer software product is stored in a storage medium, including multiple instructions configured to enable a computer device (which may be a personal computer, a server, a network device or the like) to execute all or part of the steps of the method in each embodiment of the present disclosure. The storage medium include: various media capable of storing program codes such as a USB flash disk, a mobile hard disk, a Read-Only Memory (ROM), a Random Access Memory (RAM), a magnetic disk or a compact disc.

Note that, it should be understood that the division of the above modules is only a division of logical functions, and these modules may be fully or partially integrated on a physical entity or separated physically in practical implementation. These modules can all be implemented in the form of software called by a processing element or in the form of hardware. Or part of the modules can be implemented in the form of software called by a processing element, and part of the modules can be realized in the form of hardware. For example, the determining module can be a separate processing element or integrated into a chip of the device; moreover, the determining module can also be stored in the memory of the device in the form of program codes. The function of the determining module is called and executed by a processing element of the device. The implementation of other modules is similar. In addition, all or part of these modules can be integrated or implemented independently. The processing element here can be an integrated circuit with a signal processing capability. In an implementation process, the operations or modules of the method may be accomplished by an integrated logic circuit of hardware in the processing element or an instruction in a software form.

For example, modules, units, subunits or sub-modules may be one or more integrated circuits configured to implement the above method, for example, one or more Application Specific Integrated Circuits (ASICs), or one or more Digital Signal Processors (DSPs), or one or more Field Programmable Gate Arrays (FPGAs), etc. For another example, when one of the above modules is realized by the processing element calling the program codes, the processing element can be a general-purpose processor, such as a Central Processing Unit (CPU), or other processors that can call the program codes. For another example, these modules can be integrated together in the form of System-On-a-Chip (SOC).

Terms "first", "second" and the like in the description and claims of the present disclosure are used to distinguish similar objects and do not have to describe a specific sequence or order. It should be understood that the objects may be exchanged under appropriate circumstances, so that the embodiments of the present disclosure described here are implemented, for example, in an order different from that described or shown here. In addition, terms "include" and "have" and any variations thereof are intended to cover non-exclusive inclusions. For example, it is not limited for processes, methods, systems, products or devices containing a series of operations or units to clearly list those operations or units, and other operations or units which are not clearly listed or are inherent to these processes, methods, products or devices may be included instead. In addition, "and/or" is used in the description and claims to indicate at least one of the connected objects. For example, A and/or B and/or C indicates seven cases, that is, individual A is included, individual B is included, individual C is included, both A and B exist, both B and C exist, both A and C exist, and A, B, and C all exist. Similarly, the use of "at least one of A or B" in the description and claims should be understood as "separate A, separate B, or both A and B".

The above is only the specific implementation modes of the present disclosure and not intended to limit the protection scope of the present disclosure.

## Claims

1. A method for sending interface information, applied to a first network element, comprising:
sending (21), to a second network element, at least one of: interface modes supported by a first interface of the first network element, or a current working mode of the first interface, wherein the interface modes comprise at least one of: an Ethernet mode, a Flex Ethernet, FlexE, mode, or a Metro Transport Network, MTN, mode, and the second network element is a neighboring network element of the first network element,
the method further comprising:
receiving (32), from the second network element, at least one of: interface modes supported by a second interface of the second network element, or a current working mode of the second interface; and
configuring (33) a working mode of the first interface to be a target interface mode according to the interface modes supported by the first interface and the interface modes supported by the second interface, wherein the target interface mode is an interface mode supported by both the first interface and the second interface,
wherein the configuring (33) the working mode of the first interface to be the target interface mode according to the interface modes supported by the first interface and the interface modes supported by the second interface comprises:
determining at least one interface mode supported by both the first interface and the second interface; and **characterized by**
selecting an interface mode with a highest capability rank from the at least one interface mode to be the target interface mode, and configuring the working mode of the first interface to be the target interface mode.

2. The method of claim 1, wherein the interface modes further comprise a FlexE Aware mode and an MTN Aware mode.

3. The method of claim 1, further comprising:
in response to that the received current working mode of the second interface comprises at least two interface modes, selecting an interface mode with a highest capability rank from the at least two interface modes to be the current working mode of the second interface.

4. The method of claim 1 or 2, further comprising:
in a case that interface modes supported by the second network element are not obtained by the first network element, configuring, by the first network element, the working mode of the first interface to a default interface mode.

5. The method of claim 1 or 2, comprising:
sending, by the first network element, the at least one of: interface modes supported by the first interface of the first network element, or the current working mode of the first interface, being carried in at least one Type-Length-Value, TLV, of at least one Link Layer Discovery Protocol, LLDP, packet, to the second network element.

6. The method of claim 1, comprising:
receiving, by the first network element, the interface modes supported by the second interface of the second network element and the current working mode of the second interface from at least one TLV of at least one LLDP packet.

7. The method of claim 1 or 2, further comprising:
adjusting, by the first network element, based on a current working mode of a second interface of the second network element, a channel for the first interface to send at least one LLDP packet.

8. The method of claim 7, wherein the adjusting, based on the current working mode of the second interface of the second network element, the channel for the first interface to send the at least one LLDP packet comprises:
in a case that the first interface operates in the FlexE mode or the MTN mode, in response to that the current working mode of the second interface is the FlexE mode or the MTN Aware mode, enabling a shim-to-shim management channel at the first interface, wherein the shim-to-shim management channel is used to transmit the at least one LLDP packet.

9. The method of claim 5, comprising:
in a case that the first interface operates in the FlexE mode or the MTN mode, transmitting the at least one LLDP packet by using a section management channel.

10. The method of claim 7, wherein the adjusting, based on the current working mode of the second interface of the second network element, the channel for the first interface to send the at least one LLDP packet comprises:
in response to that the current working mode of the second interface is the FlexE mode or the MTN Aware mode, transmitting the at least one LLDP packet at the first interface by using both a section management channel and a shim-to-shim management channel of FlexE/MTN overhead frames.

11. A first network element, comprising: a processor (501), a memory (503), and a program stored in the memory (503) and executable by the processor (501), wherein the program, when executed by the processor (501), implements the operations of the method for sending interface information of any one of claims 1 to 10.

12. A computer-readable storage medium having stored thereon a computer program that, when executed by a processor, implements the operations of the method for sending interface information of any one of claims 1 to 10.

## Patentansprüche

1. Verfahren zum Senden von Schnittstelleninformationen, angewendet auf ein erstes Netzwerkelement, umfassend:
Senden (21), an ein zweites Netzwerkelement, von mindestens einem von: Schnittstellenmodi, die durch eine erste Schnittstelle des ersten Netzwerkelements unterstützt werden, oder einem aktuellen Arbeitsmodus der ersten Schnittstelle, wobei die Schnittstellenmodi mindestens eines umfassen von: einem Ethernet-Modus, einem Flex Ethernet-Modus, FlexE-Modus, oder einem Metro Transport Netzwerk-Modus, MTN-Modus, und das zweite Netzwerkelement ein benachbartes Netzwerkelement des ersten Netzwerkelements ist,
das Verfahren ferner umfassend:
Empfangen (32), von dem zweiten Netzwerkelement, von mindestens einem von: Schnittstellenmodi, die durch eine zweite Schnittstelle des zweiten Netzwerkelements unterstützt werden, oder einem aktuellen Arbeitsmodus der zweiten Schnittstelle; und
Konfigurieren (33) eines Arbeitsmodus der ersten Schnittstelle, um ein Zielschnittstellenmodus gemäß den Schnittstellenmodi zu sein, die durch die erste Schnittstelle unterstützt werden, und den Schnittstellenmodi, die durch die zweite Schnittstelle unterstützt werden, wobei der Zielschnittstellenmodus ein Schnittstellenmodus ist, der sowohl durch die erste Schnittstelle als auch durch die zweite Schnittstelle unterstützt wird,
wobei das Konfigurieren (33) des Arbeitsmodus der ersten Schnittstelle, um der Zielschnittstellenmodus gemäß den Schnittstellenmodi zu sein, die durch die erste Schnittstelle unterstützt werden, und den Schnittstellenmodi, die durch die zweite Schnittstelle unterstützt werden, umfasst:
Bestimmen von mindestens einem Schnittstellenmodus, der sowohl durch die erste als auch durch die zweite Schnittstelle unterstützt wird; und **gekennzeichnet durch**
Auswählen eines Schnittstellenmodus mit einem höchsten Fähigkeitsrang aus den mindestens einem Schnittstellenmodus, um der Zielschnittstellenmodus zu sein, und Konfigurieren des Arbeitsmodus der ersten Schnittstelle, um der Zielschnittstellenmodus zu sein.

2. Verfahren nach Anspruch 1, wobei die Schnittstellenmodi ferner einen FlexE-Aware-Modus und einen MTN-Aware-Modus umfassen.

3. Verfahren nach Anspruch 1, ferner umfassend:
als Reaktion darauf, dass der empfangene aktuelle Arbeitsmodus der zweiten Schnittstelle mindestens zwei Schnittstellenmodi umfasst, Auswählen eines Schnittstellenmodus mit einem höchsten Fähigkeitsrang aus den mindestens zwei Schnittstellenmodi, um der aktuelle Arbeitsmodus der zweiten Schnittstelle zu sein.

4. Verfahren nach Anspruch 1 oder 2, ferner umfassend:
in einem Fall, dass die Schnittstellenmodi, die durch das zweiten Netzwerkelement unterstützt werden, nicht durch das erste Netzwerkelement erhalten werden, Konfigurieren, durch das erste Netzwerkelement, des Arbeitsmodus der ersten Schnittstelle auf einen Standardschnittstellenmodus.

5. Verfahren nach Anspruch 1 oder 2, umfassend:
Senden, durch das erste Netzwerkelement, des mindestens einen von: Schnittstellenmodi, die durch die erste Schnittstelle des ersten Netzwerkelements unterstützt werden, oder dem aktuellen Arbeitsmodus der ersten Schnittstelle, der in mindestens einem Typ-Länge-Wert, TLV, von mindestens einem Link Layer Discovery Protocol-Paket, LLDP-Paket, getragen wird, an das zweite Netzwerkelement.

6. Verfahren nach Anspruch 1, umfassend:
Empfangen, durch das erste Netzwerkelement, der Schnittstellenmodi, die durch die zweite Schnittstelle des zweiten Netzwerkelements unterstützt werden, und des aktuellen Arbeitsmodus der zweiten Schnittstelle von mindestens einem TLV von mindestens einem LLDP-Paket.

7. Verfahren nach Anspruch 1 oder 2, ferner umfassend:
Anpassen, durch das erste Netzwerkelement, basierend auf einem aktuellen Arbeitsmodus einer zweiten Schnittstelle des zweiten Netzwerkelements, eines Kanals, um mindestens ein LLDP-Paket zu senden.

8. Verfahren nach Anspruch 7, wobei das Anpassen, basierend auf dem aktuellen Arbeitsmodus der zweiten Schnittstelle des zweiten Netzwerkelements, des Kanals für die erste Schnittstelle, um das mindestens eine LLDP-Paket zu senden, umfasst:
in einem Fall, dass die erste Schnittstelle in dem FlexE-Modus oder in dem MTN-Modus betrieben wird, als Reaktion darauf, dass der aktuelle Arbeitsmodus der zweiten Schnittstelle der FlexE-Modus oder der MTN-Aware-Modus ist, Aktivieren eines Shim-zu-Shim-Verwaltungskanals an der ersten Schnittstelle, wobei der Shim-zu-Shim-Verwaltungskanal verwendet wird, um das mindestens eine LLDP-Paket zu übertragen.

9. Verfahren nach Anspruch 5, umfassend:
in einem Fall, dass die erste Schnittstelle in dem FlexE-Modus oder in dem MTN-Modus betrieben wird, Übertragen des mindestens einen LLDP-Pakets durch Verwenden eines Abschnittsverwaltungskanals.

10. Verfahren nach Anspruch 7, wobei das Anpassen, basierend auf dem aktuellen Arbeitsmodus der zweiten Schnittstelle des zweiten Netzwerkelements, des Kanals für die erste Schnittstelle, um das mindestens eine LLDP-Paket zu senden, umfasst:
als Reaktion darauf, dass der aktuelle Arbeitsmodus der zweiten Schnittstelle der FlexE-Modus oder der MTN-Aware-Modus ist, Übertragen des mindestens einen LLDP-Pakets an der ersten Schnittstelle durch Verwenden sowohl eines Abschnittsverwaltungskanals als auch eines Shim-zu-Shim-Verwaltungskanals von FlexE/MTN-Overhead-Frames.

11. Erstes Netzwerkelement, umfassend: einen Prozessor (501), einen Speicher (503) und ein Programm, das in dem Speicher (503) gespeichert und durch den Prozessor (501) ausführbar ist, wobei das Programm, wenn es durch den Prozessor (501) ausgeführt wird, die Betriebe des Verfahrens zum Senden von Schnittstelleninformationen nach einem der Ansprüche 1 bis 10 implementiert.

12. Computerlesbares Speichermedium, auf dem ein Computerprogramm gespeichert ist, das, wenn es durch einen Prozessor ausgeführt wird, die Betriebe des Verfahrens zum Senden von Schnittstelleninformationen nach einem der Ansprüche 1 bis 10 implementiert.

## Revendications

1. Procédé d'envoi d'informations d'interface, appliqué à un premier élément de réseau, comprenant :
un envoi (21), à un second élément de réseau, d'au moins l'un parmi : des modes d'interface pris en charge par une première interface du premier élément de réseau, ou un mode de fonctionnement actuel de la première interface, dans lequel les modes d'interface comprennent au moins l'un parmi : un mode Ethernet, un mode Flex Ethernet, FlexE, ou un mode Metro Transport Network, MTN, et le second élément de réseau est un élément de réseau voisin du premier élément de réseau,
le procédé comprenant en outre :
une réception (32), du second élément de réseau, d'au moins l'un parmi : des modes d'interface pris en charge par une seconde interface du second élément de réseau, ou un mode de fonctionnement actuel de la seconde interface ; et
une configuration (33) d'un mode de travail de la première interface pour qu'il soit un mode d'interface cible selon des modes d'interface pris en charge par la première interface et des modes d'interface pris en charge par la seconde interface, le mode d'interface cible étant un mode d'interface pris en charge à la fois par la première interface et par la seconde interface,
dans lequel la configuration (33) du mode de travail de la première interface pour qu'il soit le mode d'interface cible selon des modes d'interface pris en charge par la première interface et des modes d'interface pris en charge par la seconde interface comprend :
une détermination d'au moins un mode d'interface pris en charge par la première interface et la seconde interface ; et **caractérisé par**
une sélection d'un mode d'interface ayant le rang de capacité le plus élevé parmi l'au moins un mode d'interface pour qu'il soit le mode d'interface cible, et une configuration du mode de travail de la première interface pour qu'il soit le mode d'interface cible.

2. Procédé selon la revendication 1, dans lequel les modes d'interface comprennent en outre un mode FlexE Aware et un mode MTN Aware.

3. Procédé selon la revendication 1, comprenant en outre :
en réponse au fait que le mode de travail actuel reçu de la seconde interface comprend au moins deux modes d'interface, une sélection d'un mode d'interface ayant le rang de capacité le plus élevé parmi les au moins deux modes d'interface pour qu'il soit le mode de travail actuel de la seconde interface.

4. Procédé selon la revendication 2, comprenant en outre :
dans le cas où les modes d'interface pris en charge par le second élément de réseau ne sont pas obtenus par le premier élément de réseau, une configuration, par le premier élément de réseau, du mode de fonctionnement de la première interface en tant que mode d'interface par défaut.

5. Procédé selon la revendication 1, comprenant :
Un envoi, par le premier élément de réseau, de l'au moins l'un parmi : des modes d'interface pris en charge par la première interface du premier élément de réseau, ou du mode de fonctionnement actuel de la première interface, étant transporté dans au moins un type-longueur-valeur, TLV, d'au moins un paquet Link Layer Discovery Protocol, LLDP, au second élément de réseau.

6. Procédé selon la revendication 1, comprenant :
une réception, par le premier élément de réseau, des modes d'interface pris en charge par la seconde interface du second élément de réseau et du mode de fonctionnement actuel de la seconde interface à partir d'au moins un TLV d'au moins un paquet LLDP.

7. Procédé selon la revendication 1 ou 2, comprenant en outre :
une réglage, par le premier élément de réseau, en fonction d'un mode de fonctionnement actuel d'une seconde interface du second élément de réseau, d'un canal pour la première interface afin d'envoyer au moins un paquet LLDP.

8. Procédé selon la revendication 7, dans lequel l'ajustement, en fonction du mode de fonctionnement actuel de la seconde interface du second élément de réseau, du canal pour la première interface afin d'envoyer l'au moins un paquet LLDP comprend :
dans le cas où la première interface fonctionne en mode FlexE ou en mode MTN, en réponse au fait que le mode de fonctionnement actuel de la seconde interface est le mode FlexE ou le mode MTN Aware, l'activation d'un canal de gestion shim-to-shim sur la première interface, le canal de gestion shim-to-shim étant utilisé pour transmettre l'au moins un paquet LLDP.

9. Procédé selon la revendication 5, comprenant :
dans le cas où la première interface fonctionne en mode FlexE ou en mode MTN, la transmission d'au moins un paquet LLDP en utilisant un canal de gestion de section.

10. Procédé selon la revendication 7, dans lequel l'ajustement, en fonction du mode de fonctionnement actuel de la seconde interface du second élément de réseau, du canal pour la première interface afin d'envoyer l'au moins un paquet LLDP comprend :
en réponse au fait que le mode de fonctionnement actuel de la seconde interface est le mode FlexE ou le mode MTN Aware, la transmission de l'au moins un paquet LLDP à la première interface en utilisant à la fois un canal de gestion de section et un canal de gestion shim-to-shim de trames de surcharge FlexE/MTN.

11. Premier élément de réseau, comprenant : un processeur (501), une mémoire (503) et un programme stocké dans la mémoire (503) et exécutable par le processeur (501), dans lequel le programme, lorsqu'il est exécuté par le processeur (501), met en oeuvre les opérations du procédé d'envoi d'informations d'interface de l'une quelconque des revendications 1 à 10.

12. Support de stockage lisible par ordinateur sur lequel est stocké un programme d'ordinateur qui, lorsqu'il est exécuté par un processeur, met en oeuvre les opérations du procédé d'envoi d'informations d'interface de l'une quelconque des revendications 1 à 10.
